(19) **Europäisches Patentamt**

**European Patent Office**

**Office européen des brevets**

(11) **EP 1 702 791 A2**

(12) **EUROPEAN PATENT APPLICATION**

(43) Date of publication:
20.09.2006 Bulletin 2006/38

(51) Int Cl.:
**B60N 2/50** (2006.01)

(21) Application number: 06004596.0

(22) Date of filing: 07.03.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.03.2005 JP 2005073928**

(71) Applicant: **Delta Tooling Co., Ltd.**
**Hiroshima-shi**
**Hiroshima**
**736-0084 (JP)**

(72) Inventors:
• **Fujita, Etsunori**
**Akiku**
**Hiroshima-shi**
**Hiroshima 736-0084 (JP)**
• **Oshimo, Hiroki**
**Akiku**
**Hiroshima-shi**
**Hiroshima 736-0084 (JP)**

(74) Representative: **HOFFMANN EITLE**
**Patent- und Rechtsanwälte**
**Arabellastrasse 4**
**81925 München (DE)**

(54) **Seat suspension control mechanism, magnetic spring and magnetic damper**

(57)    A magnet position adjustment mechanism 50 is provided to change a relative positional relation between opposing permanent magnets by rotating at least one of opposing permanent magnets 31 and 41 of a first and second magnet units 30 and 40 along the facial direction. By adjusting the magnetic poles of the opposing permanent magnets 31, 32 or 41, 42 to be different or the same, the damping ratio changes at the time when a movable permanent magnet 24 and a conductor 25 supported by a first and second arms 22 and 23 pass through. At the time of seating and the start of driving, if, for instance, a predetermined time and a magnetic spring are adjusted in a range so as not to generate a negative spring constant, and a damping ratio of the magnetic damper is set to become small, a feeling of seating with a sense of strong spring is obtained so that a sense of dropping can be suppressed at the time of seating, and a feeling of something foreign can also be suppressed at the time of driving start.

F I G. 5

Description

BACKGROUND OF THE INVENTION

1. FIELD OF THE INVENTION

The present invention relates to a control mechanism of a seat suspension, a magnetic spring, and a magnetic damper for vehicles such as a car.

2. DESCRIPTION OF THE RELATED ART

A seat suspension as shown in the following is disclosed in Patent Document 1. This seat suspension has a structure such that an upper frame provided to be vertically movable with respect to a lower frame attached to a vehicle body floor is elastically supported with a magnetic spring and a torsion bar, so as to obtain a structure in which the whole spring constant is made extremely small, preferably substantially nearly zero, by combining the magnetic spring, which has a negative spring constant in a predetermined displacement range, with the torsion bar, which has a positive spring constant, and absorbing vibration by combining the spring constant being substantially zero within this predetermined displacement range (in the vicinity of an equilibrium point) and a spring constant varying in the range from several kg/mm to 10 kg/mm, the range being out side the predetermined range. In addition, there is another structure prepared by combining with the above structure a magnetic damper applying an eddy current generated by a magnetic flux convergence type magnetic circuit which is created by passing a conductor between magnets so that a strong damping force is served when the speed of inputted vibration is great.

[Patent Document 1]

Japanese Patent Laid-open No. 2003-320884

In the technology disclosed in Patent Document 1, since the whole spring constant is extremely small, it is possible to reduce the load that vibration places on a human body. However, lessening the transmission of vibration to a human body results in an opposite phase between a human body and a vehicle body, which means that displacement of the human body becomes large with reference to the vehicle body. Accordingly, though the technology disclosed in Patent Document 1 reduces influence of vibration, due to a large relative displacement between the human body and the vehicle body, it may be felt as a feeling of something foreign until human sensibility gets used to it, or at the start of driving, or a feeling of something foreign is felt when vibration at a low frequency with a large amplitude is inputted. Moreover, since it is designed to be in balance within a range of the spring constant being nearly zero when a load (body weight) is applied during seating, when a seating movement starts from a no-loading state, sometimes a feeling of dropping is felt until stabilized at an equilibrium point. Also, in cases where it goes below the equilibrium point during seating, since there is an adjustment means to return to the equilibrium point, sometimes a feeling of bottom touch is felt. Sometimes a comfortable feeling is felt at a small damping ratio, or sometimes it is felt at a large damping ratio according to an outside stimulus such as vibration while driving. However, a conventional seat suspension is structured to absorb vibration at a predetermined spring constant or to make the damping force greater as an input speed of vibration increases, and its damping force cannot be adjusted according to the magnitude of outside stimulus. Thus, it is impossible to adjust to make, for instance, the damping force larger at a low frequency vibration during which an input speed of vibration is small, or the damping force smaller at a high frequency vibration during which the input speed of vibration is high.

SUMMARY OF THE INVENTION

The present invention has been made in view of the above problems and an object of the present invention is to provide a seat suspension control mechanism, a magnetic spring, and a magnetic damper which can reduce feelings of the presence something foreign at the time of seating or at the start of driving, or a feeling of something foreign in response to low-frequency, large-amplitude input vibration by adjustment of a damping force, can reduce high frequency vibration during high speed driving by introducing an opposite phase owing to adjustment of a spring constant and a damping force, and can reduce vibrations of various input frequencies during driving by changing a damping ratio based on the input frequency so that seating comfort and riding comfort can be improved in a seat suspension designed to make the whole spring constant nearly zero within a predetermined displacement range by combining a spring with a positive spring constant such as a torsion bar or a coil spring, and a magnetic spring having a negative spring constant range.

In order to solve the above-described problems, the invention described in claim 1 provides a seat suspension control mechanism provided with a first attachment member attached on a vehicle body floor side, and a second attachment member attached to a member which is relatively displaced together with a seat by vibration with respect to the vehicle body floor, including:

> a magnetic spring provided with a magnet position adjustment mechanism including a magnet unit having a pair of permanent magnets disposed opposedly at a predetermined distance, and a movement member provided with a permanent magnet disposed relatively movable between opposing permanent magnets in the magnet unit, and rotating at least one out of the opposing permanent magnets in the magnet unit along a facial direction so as to adjust the relative positional relation between the opposing permanent magnets in order to vary the spring constant; and
>
> a magnetic damper provided with a magnet position adjustment mechanism including a magnet unit having a pair of permanent magnets disposed opposedly at a predetermined distance, and a movement member provided with a conductor made of a non-magnetic substance disposed relatively movable between opposing permanent magnets in the magnet unit, and rotating at least one out of the opposing permanent magnets in the magnet unit along a facial direction so as to adjust the relative positional relation between the opposing permanent magnets in order to vary the damping coefficient, in which
>
> the magnet unit of the magnetic spring and the magnet unit of the magnetic damper are attached on one out of the first attachment member and second attachment member, and the movement member of the magnetic spring and the movement member of the magnetic damper are fixed on the other of the first attachment member and second attachment member respectively.

The invention described in claim 2 provides the seat suspension control mechanism according to claim 1, in which the magnetic spring includes a region to be a negative spring constant at a predetermined displacement range when the movement member composed of a permanent magnet moves between permanent magnets in the magnet unit adjusted in a predetermined relative positional relation by the magnet position adjustment mechanism, in which the magnetic spring works with an elastic member provided on the seat suspension and having a positive spring constant to adjust a superimposed spring constant to be close to nearly zero.

The invention described in claim 3 provides the seat suspension control mechanism according to claim 1 or claim 2, in which in a case of enlarging the damping ratio of the entire seat suspension, at least one permanent magnet composing a magnet unit of the magnetic spring is rotated a predetermined amount in a direction to be a relative positional relation where the spring constant is the maximum in the negative direction in a predetermined displacement range by the magnet position adjustment mechanism of the magnetic spring to control a superimposed spring constant over an elastic member provided on the seat suspension and having a positive spring constant to be close to nearly zero, and in a case of lessening the damping ratio of the entire seat suspension, at least one permanent magnet composing a magnet unit of the magnetic spring is rotated a predetermined amount in a direction away from a relative positional relation where the spring constant is the maximum in the negative direction in a predetermined displacement range by the magnet position adjustment mechanism of the magnetic spring to control a superimposed spring constant over the elastic member provided on the seat suspension and having a positive spring constant to enlarge in the positive direction.

The invention described in claim 4 provides the seat suspension control mechanism according to claim 1 or claim 2, in which

in a case of enlarging the damping ratio of the entire seat suspension, at least one permanent magnet composing a magnet unit of a magnetic damper is rotated a predetermined amount in a direction to be a relative positional relation where a damping coefficient becomes the maximum by a magnet position adjustment mechanism of the magnetic damper, and

in a case of lessening the damping ratio of the entire seat suspension, at least one permanent magnet composing a magnet unit of the magnetic damper is rotated a predetermined amount in a direction to be a relative positional relation where the damping coefficient becomes the minimum by the magnet position adjustment mechanism of the magnetic damper.

The invention described in claim 5 provides the seat suspension control mechanism according to claim 1 or claim 2, in which

in a case of enlarging the damping ratio of the entire seat suspension, at least one permanent magnet composing a magnet unit of the magnetic spring is rotated a predetermined amount in a direction to be a relative positional relation where the spring constant is the maximum in the negative direction in a predetermined displacement range by the magnet position adjustment mechanism of the magnetic spring to control a superimposed spring constant over an elastic member provided on the seat suspension and having a positive spring constant to be close to nearly zero, and at least one permanent magnet composing a magnet unit of the magnetic damper is rotated in a direction to be a relative positional relation where the damping coefficient is the maximum by a magnet position adjustment mechanism of the magnetic damper, and

in a case of lessening the damping ratio of the entire seat suspension, at least one permanent magnet composing a magnet unit of the magnetic spring is rotated a predetermined amount in a direction away from a relative positional relation where the spring constant is the maximum in the negative direction in a predetermined displacement range by the magnet position adjustment mechanism of the magnetic spring to control a superimposed spring constant over the elastic member provided on the seat suspension and having a positive spring constant to enlarge in the positive direction, and at least one permanent magnet composing a magnet unit of the magnetic damper is adjusted in a direction to be a relative positional relation where the damping coefficient is the minimum by a magnet position adjustment mechanism of the magnetic damper.

The invention described in claim 6 provides the seat suspension control mechanism according to any one from claims 1 to 5, in which
a magnet position adjustment mechanism composing the magnetic spring and a magnet position adjustment mechanism composing the magnetic damper are controlled by the same rotational driving unit, in which the magnet position adjustment mechanism includes:

a first gear member connected to any one of the permanent magnets of any one set of the magnet units composing the magnetic spring and magnetic damper;
a second gear member connected to any one of the permanent magnets of the other set of the magnet units; and
a third gear member engaging with the first and second gear members,
in which the rotational driving, unit is connected to any one of the first, second, and third gear members, so that the first gear member and the second gear member rotate in synchronization with each other.

The invention described in claim 7 provides the sea suspension control mechanism according to any one from claims 1 to 6, in which
a magnet position adjustment mechanism composing the magnetic spring and a magnet position adjustment mechanism composing the magnetic damper are controlled independently by rotational driving units provided thereon respectively, and
the respective rotational driving units are connected to any one permanent magnet of any one set of the magnet units composing the magnetic spring and magnetic damper, and any one permanent magnet of the other set of the magnet units to perform position adjustment by rotating the permanent magnets of the respective sets independently.

The invention described in claim 8 provides the seat suspension control mechanism according to any one from claims 1 to 7, in which the magnet position adjustment mechanism is set to rotate at least one permanent magnet in the respective magnet units periodically, randomly, or chaotically.

The invention described in claim 9 provides a magnetic spring, including: a magnet unit provided with a pair of permanent magnets opposedly disposed at a predetermined distance; and a movement member provided with a permanent magnet disposed relatively movable between opposing permanent magnets of the magnet unit, in which a magnet position adjustment mechanism rotating at least one of opposing permanent magnets of the magnet unit along a facial direction to change a spring constant by adjusting a relative positional relation between opposing permanent magnets.

The invention described in claim 10 provides a magnetic damper, including: a magnet unit provided with a pair of permanent magnets opposedly disposed at a predetermined distance; and a movement member provided with a conductor made from a non-magnetic substance disposed relatively movable between opposing permanent magnets of the magnet unit, in which:

a magnet position adjustment mechanism rotating at least one of opposing permanent magnets of the magnet unit along a facial direction to change a damping coefficient by adjusting a relative positional relation between opposing permanent magnets.

**BRIEF DESCRIPTION OF THE DRAWINGS**

FIG. 1 is a perspective view showing a seat suspension control mechanism relating to an embodiment of the present invention;
FIG. 2 is a front view of FIG. 1;
FIG. 3 is a side view of FIG. 1;
FIG. 4 is a perspective view showing a state in which the seat suspension control mechanism is connected to a frame;
FIG. 5 is an exploded perspective view of the state shown in FIG. 4;
FIGs. 6A and 6B are arrow diagrams taken from the A-A line in FIG. 2 and views to explain methods of adjustment by magnet position adjustment mechanisms, where FIG. 6A shows magnet positions (direction) of respective magnet units when the damping ratio is small, and FIG. 6B shows magnet positions (direction) of respective magnet units when the damping ratio is large;

FIG. 7 is a view showing another example of permanent magnets forming a second magnet unit;

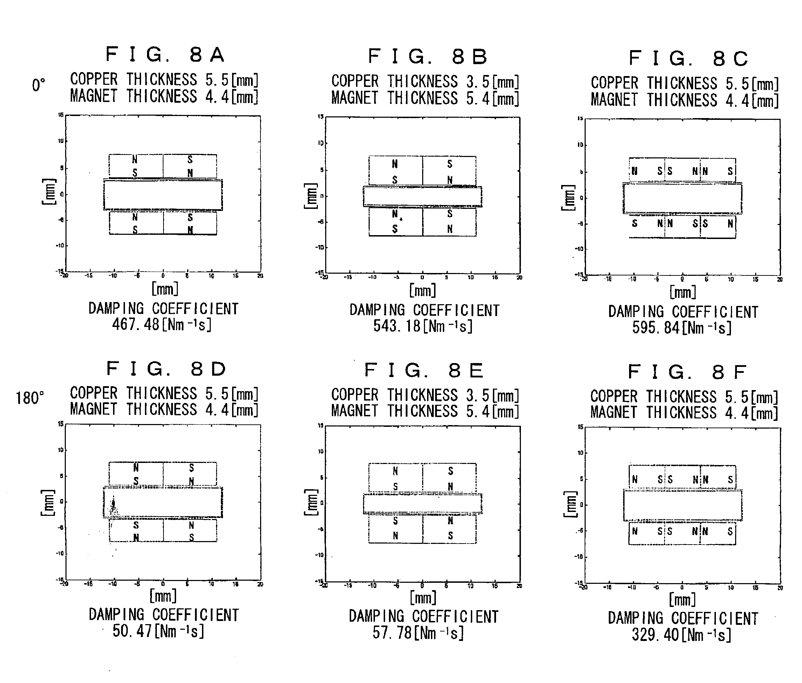

FIGs. 8A and 8D are views showing a configuration of respective permanent magnets and conductors when the thickness of copper forming the conductors is made thick and the thickness of permanent magnets forming a second magnet unit is made thin and the damping coefficient is determined, FIGs. 8B and 8E are views showing a configuration of respective permanent magnets and conductors when the thickness of copper forming the conductors is made thin and the thickness of permanent magnets forming the second magnet unit is made thick and the damping coefficient is determined, and FIGs 8C and 8F are views showing a configuration of respective permanent magnets and conductors when the damping coefficient is determined by adopting a triple-pole magnet as the permanent magnet forming the second magnet unit;

FIG. 9 is a view showing respective rotational angle-moment characteristics of a magnetic spring formed by permanent magnets forming a first magnet unit and movable side permanent magnets, those of a metal spring such as a torsion bar or the like, and those of the whole superimposed of the magnetic spring over the metal spring and respective Lissajous figures when the damping ratio is set to be large and small;

FIG. 10A is a view showing an appearance of a magnetic flux when the damping coefficient is at its maximum, and FIG. 10B is a view showing an appearance of a magnetic flux when the damping coefficient is at its minimum;

FIG. 11 is a view showing the acceleration transmissibility when a seat is attached on a seat suspension on which a seat suspension control mechanism according to the above-described embodiment is mounted;

FIG. 12A is a view showing an example of a time chart when first and third permanent magnets are rotation controlled by the magnet position adjustment mechanism, FIG. 12B is a table showing concrete details of respective control modes, and FIG. 12C is a table of examples of spring constant values in respective states: "high spring", "medium spring" and "low spring"; and

FIG. 13A is a view showing changes of the spring constant when the first permanent magnet forming the magnetic spring is rotated in a cycle of 5 seconds by the magnet position adjustment mechanism, and FIG. 13B is a view showing values at the maximum, minimum and the intermediate thereof. The spring constant changes in the direction of the arrow.

## DETAILED DESCRIPTION OF THE PREFERRED EMBODIMENT(S)

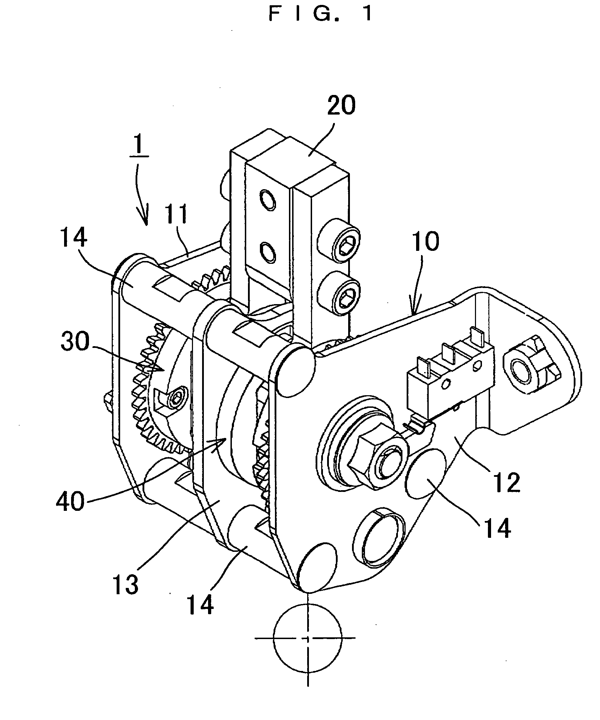

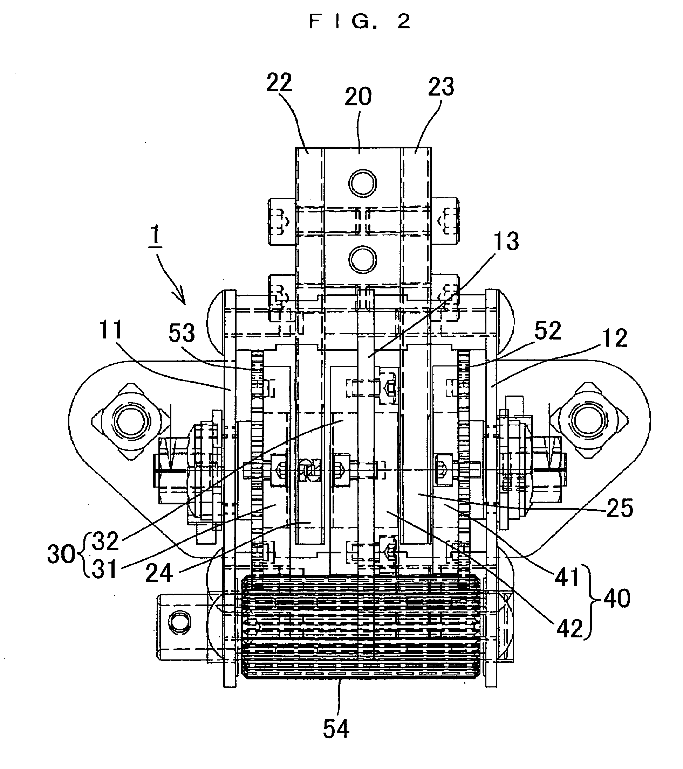

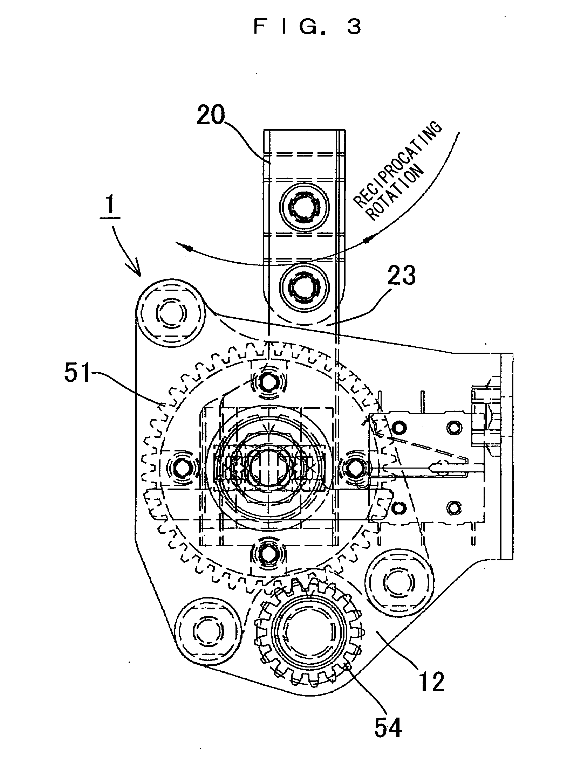

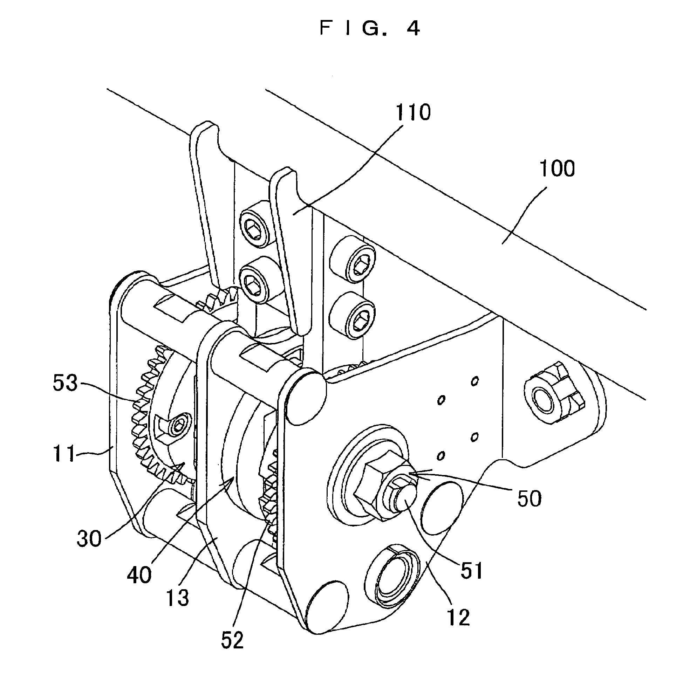

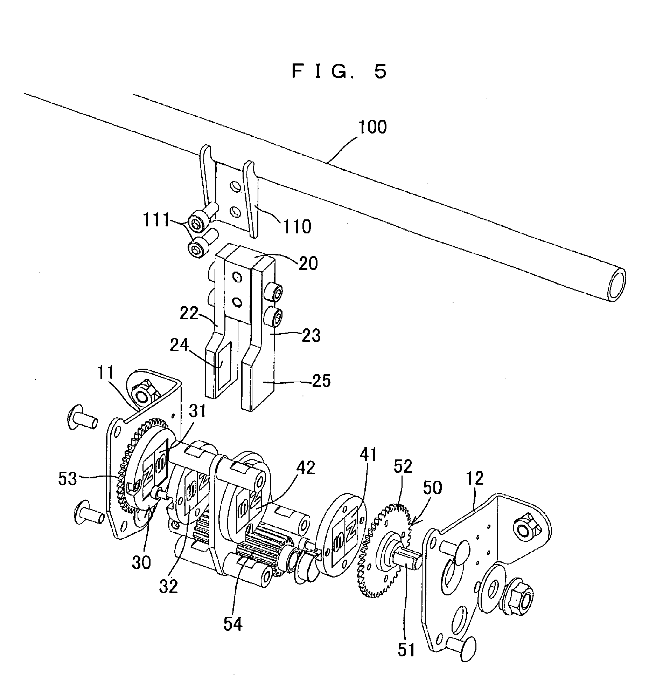

The present invention will be explained in detail based on the embodiments shown in the drawings hereinafter. FIG. 1 is a perspective view showing a seat suspension control mechanism 1 relating to one embodiment of the present invention. FIG. 2 is a front view of FIG. 1, and FIG. 3 is a side view of FIG. 1. FIG. 4 is a perspective view showing a state of a second attachment member in connection with a frame, and FIG. 5 is its exploded perspective view.

As shown in these drawings, the seat suspension control mechanism 1 of the present embodiment includes a first attachment member 10 fixed at an arbitrary position on a vehicle body floor (not shown), and a second attachment member 20 fixed to an arbitrary member (for instance, a frame 100 connected to a seat cushion via a link member or the like and fluctuates around a shaft fixed on the vehicle body floor (refer to FIG. 5). Note that it is of course acceptable to attach the first attachment member 10 and the second attachment member 20 in an inverse positional relation, in other words, to attach the second attachment member 20 on the vehicle body floor side, and the first attachment member 10 on the frame 100. Note that the term "vehicle body floor side" includes not only vehicle body floor but also members which vibrate together with the vehicle body floor during vibration and are provided on the vehicle body floor so as to relatively displace with respect to the seat.

The first attachment member 10 includes first and second end wall members 11 and 12 disposed at a predetermined distance with nearly an L shaped section and a parting board 13 disposed substantially midway between the end wall members 11, 12, and a connection frame 14 is provided penetrating these end wall members and the parting board in the thickness direction so as to connectedly hold them at predetermined intervals to each other.

A first magnet unit 30 is supported by the first end wall member 11 and the parting board 13, and a second magnet unit 40 is supported by the second end wall member 12 and the parting board 13. As shown in FIG. 5, the first magnet unit 30 is composed of a first permanent magnet 31 disposed along the inner surface of the first end wall member 11, and a second permanent magnet 32 disposed along a surface of the parting board 13 facing the inner surface of the first end wall member 11. Similarly, the second magnet unit 40 is composed of a third permanent magnet 41 disposed along the inner surface of the second end wall member 12, and a fourth permanent magnet 42 disposed along the other surface of the parting board 13 facing the inner surface of the second end wall member 12.

In the present embodiment, among the members described above, the second permanent magnet 32 and the fourth permanent magnet 42 are fixedly attached on the respective surfaces of the parting board 13, and the first permanent magnet 31 and the third permanent magnet 41 are rotatably attached to the respective end wall members

EP 1 702 791 A2

11 and 12 by the magnet position adjustment mechanism 50.

The magnet position adjustment mechanism 50 includes a rotational driving unit (not shown) such as a motor or the like, a rotary shaft 51 rotated by the driving of the rotational driving unit, and gear members 52 to 54 transmitting the rotational driving force. The rotational driving unit is disposed, for instance, outside of the second end wall member 12, the rotary shaft 51 is disposed penetrating through the second end wall member 12 in the thickness direction and connected to the first gear member 52 disposed along the inner surface of the second end wall member 12. Then, the third permanent magnet 41 is fixed on the inner surface of the first gear member 52 in layer, which makes the third permanent magnet 41 rotate along the facial direction by driving of the rotational driving unit. Moreover, a second gear 53 is rotatably disposed along the inner surface of the first end wall member 11, the third gear member 54 having a predetermined length is disposed between the first gear 52 and the second gear 53 so as to engage with both gear members, and the first permanent magnet 31 is fixed on the inner surface of the second gear member 53 in layer. Accordingly, when the first gear member 52 rotates, the second gear member 53 rotates via the third gear member 54. Therefore, the first permanent magnet 31 can be rotated a predetermined amount by the driving of the rotational driving unit in synchronization with the third permanent magnet 41. It should be noted that the rotational driving unit is not connected to the rotary shaft 51 connected to the first gear member 52, but may be connected to the second gear member 53 or the third gear member 54. Since the respective first to third gear members 52 to 54 engage with each other, even when the rotational driving unit is connected to any of the gear members, the first and second gear members 52 and 53 rotate in synchronization with each other.

The second attachment member 20 is formed in a block, and a first and second arms 22 and 23, as movement members, are fixed extending downward on both sides of the second attachment member 20. By disposing the first and second arms 22 and 23 between the second attachment member 20, the first arm 22 can position between the first permanent magnet 31 and the second permanent magnet 32 composing the first magnet unit 30, and the second arm 23 can position between the third permanent magnet 41 and the fourth permanent magnet 42 composing the second magnet unit 40. A permanent magnet (movable side permanent magnet) 24 is attached on the first arm 22 at a position possible to face the first permanent magnet 31 and the second permanent magnet 32, and a conductor 25 made of non-magnetic substance such as copper is attached on the second arm 23 at a position where it is possible to face the third permanent magnet 41 and the fourth permanent magnet 42. Note that since the second arm 23 itself is made from copper in the present embodiment, the lower portion of the second arm 23 serves also as the conductor 25.

The second attachment member 20 is fixed to an attachment plate 110 fixed with bolts 111 on the frame 100 which is relatively displaced with a seat by vibration as shown in FIGs. 4 and 5. The frame 100 is elastically supported by a torsion bar (not shown), and moves rotationally so as to depict a circular arc associated with vertical movement of the seat cushion. Accordingly, in the present embodiment, the respective arms 22 and 23 serving as a movement member supported by the second attachment member 20 perform reciprocating rotational movement so as to depict a circular arc by vertical movements of the seat cushion as shown by an arrow in FIG. 3 in spaces between the first and second permanent magnets 31 and 32, and between the third and fourth permanent magnets 41 and 42. Note that as a movement member the present invention is applicable not only to a member performing rotational movement like this but also to a member having a structure performing linear movement in spaces between the respective permanent magnets.

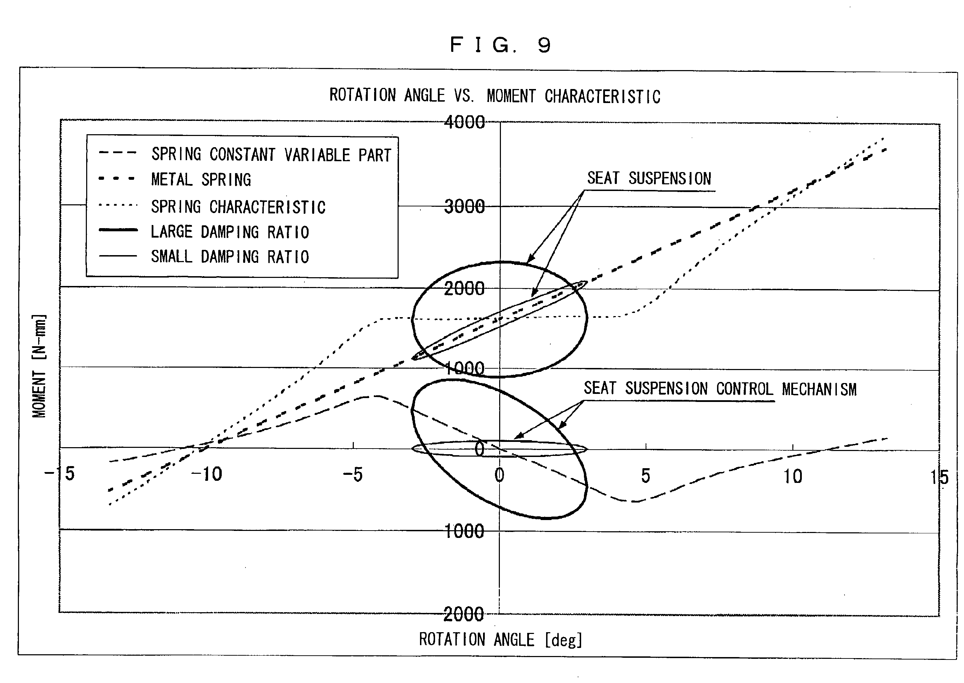

In the present embodiment, a magnetic spring defined in the claims is composed of the first and second permanent magnets 31 and 32 composing the first magnet unit 30, and the movable side permanent magnet 24 attached to the first arm 22. The rotation angle of this magnetic spring (the rotation angle of the first arm 22) vs. moment characteristic is as shown in FIG. 9. In a range of a predetermined rotation angle (a range of about -4° to about +4° with a perpendicular state taken as zero degrees), the magnetic spring has a negative spring constant where the term negative means that the moment becomes smaller as the rotation angle changes in a positive direction. Accordingly, if a metal spring or the like having a positive spring constant of which absolute value is nearly the same is used as a torsion bar, a coil spring, or the like supporting the frame 100 relatively displacing with the seat, the total spring constant obtained by superimposing one on the other is substantially zero in the range of the above-described rotation angle as shown in FIG. 9. Moreover, the magnetic damper defined in the claim is composed of the third and fourth permanent magnets 41 and 42 composing the second magnet unit 40 and the conductor 25 attached to the second arm 23. It should be noted that in the present embodiment the magnet position adjustment mechanism 50 can adjust both of the first permanent magnet 31 contained in the magnetic spring, and the third permanent magnet 41 contained in the magnetic damper, and the magnet position adjustment mechanism contained in the magnetic spring and the magnet position adjustment mechanism contained in the magnetic damper defined in claim 1 are served by the magnet position adjustment mechanism 50 described in the present embodiment only.

In other words, in the present embodiment, by combining: a magnetic spring formed with the first and second permanent magnet 31, 32 composing the first magnet unit 30, and the movable permanent magnet 24 attached to the first arm 22; and a spring having a positive spring constant such as a torsion bar provided at a suitable position of the seat suspension, a mechanism is constructed, which makes the spring constant substantially zero in the vicinity of the equilibrium point balanced with a load of the seated person (body weight) mentioned as a conventional example (related art), and the magnet position adjustment mechanism 50 is provided additionally to adjust a damping ratio when the first and second arms 22 and 23 provided with the movable permanent magnet 24 and the conductor 25 move in the space between the magnet units 30 and 40.

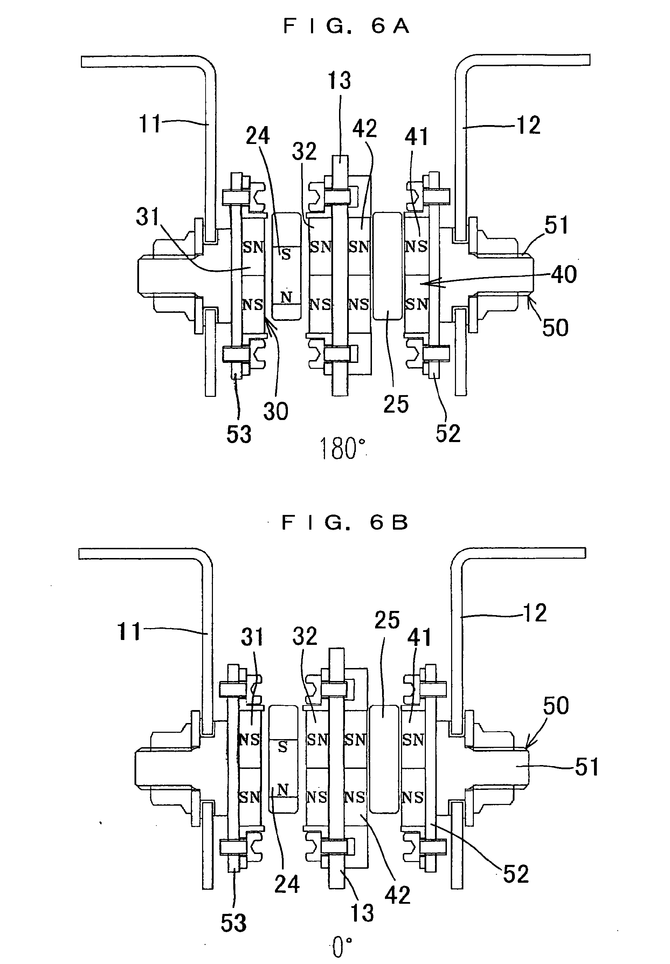

It is possible to use a monopole magnet in which the north and south poles are magnetized in a passage direction of the movable side magnet 24 supported by the first arm 22 as the first and second permanent magnets 31 and 32 of the first magnet unit 30 composing the magnet spring, but as shown in FIGs. 6A and 6B, it is preferable to use a double-pole magnet made by adhering magnets of which the north and south poles are magnetized in the thickness direction such that different poles are arranged side by side along the passage direction of the movable magnet 24 because of effective application of the magnetic flux. By taking this structure, since the magnetic field changes between the case when the same poles of the first and second permanent magnets 31 and 32 are disposed face-to-face (a state shown in FIG. 6B), and the case when the different poles thereof are disposed face-to-face (a state shown in FIG. 6A), the spring constant at the time when the movable magnet 24 passes between the first and second permanent magnets 31 and 32 changes according to the amount of rotation of the first permanent magnet 31. In the present embodiment, when the relative positional relation of the first and second permanent magnets 31 and 32 is established disposing the same poles face-to-face, the spring constant in a predetermined displacement range when the movable magnet 24 moves becomes the maximum in the negative direction as described above, and when disposing the different poles face-to-face, it enters a state of furthermost position from the positional relation at which the spring constant is the maximum in the negative direction in a predetermined displacement range (in the present embodiment, a state of rotating the first permanent magnet 31 by 180° from a positional relation at which the spring constant is the maximum in the negative direction). As above, the closer the same poles of the first and second permanent magnets 31 and 32 draw near by rotating, the greater the spring constant in the negative direction becomes. It should be noted that in the case of disposing the same magnetic poles face-to-face, when both the first and second permanent magnets 31 and 32 are rotated 180°, the positions of the same north poles facing each other and the same south poles also facing each other are reversed, which causes a positive spring constant when displacing in a positive direction, for instance, from -4 degrees to +4 degrees rotation angle in FIG. 9.

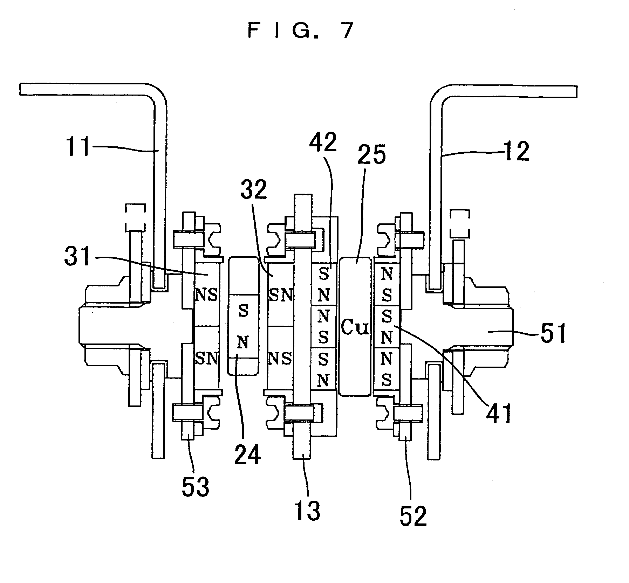

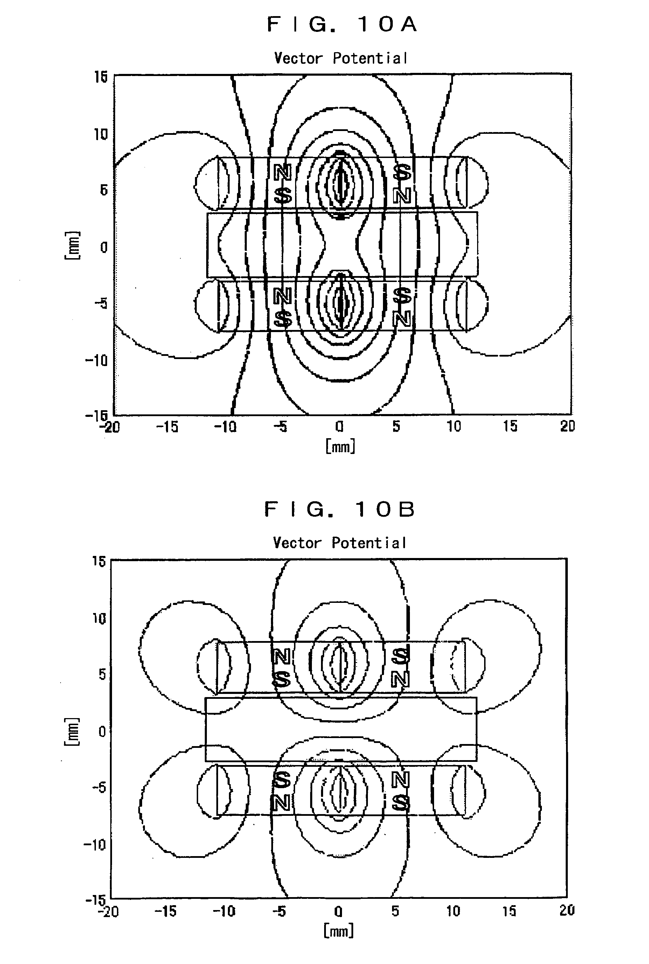

On the other hand, though a monopole magnet can be used for the third and fourth permanent magnets 41 and 42 forming the second magnet unit 40 composing a magnetic damper similarly as above, it is preferable to use a double-pole magnet as shown in FIGs. 6A and 6B. It is also possible to use a triple-pole magnet by adhering three pieces of magnets magnetized along the movement direction of the conductor 25 supported by the second arm 23 side by side along the movement direction of the conductor 25 as shown in FIG. 7. In all cases, when the same magnetic poles are disposed face-to-face (the state shown in FIG. 6A), since the magnetic flux does not converge on the conductor 25 but diverges, the damping coefficient of the damping force due to electromagnetic induction becomes the minimum as shown in FIG. 10B (magnetic flux divergent type). When different magnetic poles are disposed face-to-face (the state shown in FIG. 6B and FIG. 7), the magnetic flux converges on the conductor 25, and the damping coefficient becomes the maximum (magnetic flux convergent type) as shown in FIG. 10A. Accordingly, in the present embodiment, it is possible to adjust to a suitable damping coefficient by adjusting the amount of rotation of the third permanent magnet 41 in any direction whether the same magnetic poles should be disposed face-to-face or the different poles should be disposed face-to-face. Here, damping coefficients are determined for the third and fourth permanent magnets 41 and 42 established according to the three conditions shown in FIGs. 8A to 8F. That is, respective damping coefficients are determined for a first case of using a double-pole magnet having a conductor 25 (copper) 5.5 mm thick and the third and fourth permanent magnets 41 and 42 having a thickness of 4.4 mm (FIGs. 8A and 8D), for a second case of using a double-pole magnet having a conductor 25 (copper) 3.5 mm thick and the third and fourth permanent magnets 41 and 42 having a thickness of 5.4 mm (FIGs. 8B and 8E), and for a third case of using a triple-pole magnet having a conductor 25 (copper) 5.5 mm thick and the third and fourth permanent magnets 41 and 42 having a thickness of 4.4 mm (FIGs. 8C and 8F). Note that FIGs. 8A to 8C are for the case that the different magnetic poles of the third and fourth permanent magnets 41 and 42 are disposed face-to-face, and FIGs. 8D to 8F are for the case that the same poles of the third and fourth permanent magnets are disposed face-to-face by rotating them 180°.

As a result, FIG. 8A was 467.48 [Nm$^{-1}$s], FIG. 8B was 543.18 [Nm$^{-1}$s], and FIG. 8C was 595.84 [Nm$^{-1}$s]. When the same poles are disposed face-to-face by rotating 180°, FIG. 8D was 50.47 [Nm$^{-1}$s], FIG. 8E was 57.78 [Nm$^{-1}$s], and FIG. 8F was 329.40 [Nm$^{-1}$s]. Accordingly, in the case of a double-pole magnet, the minimum value of the damping coefficient corresponds to about 10% of the maximum value, therefore, the width of deviation was large, but in the case of triple-pole magnet, the width of deviation between the maximum value and the minimum value was small. From FIGs. 8A and 8B, it was found that it is possible to obtain a magnet having a much larger damping coefficient even with the same double-pole magnet by changing the thickness of copper (conductor 25) and the thickness of the magnet (the third and fourth permanent magnets 41 and 42).

From the above, if the directions of the first permanent magnet 31 of the first magnet unit 30 composing a magnet spring and the third permanent magnet 41 of the second magnet unit 40 composing a magnet damper are varied by driving the above-described magnet position adjustment mechanism 50, the spring constant and the damping coefficient change drastically, which makes it possible to vary the damping ratio of the entire seat suspension. However, the opposing magnetic poles of the respective permanent magnets when the spring constant is at its maximum in the negative direction, and the opposing magnetic poles of the respective permanent magnets when the damping coefficient is at its maximum or minimum, depending on whether one of the respective magnet units is rotated or both are rotated as described in the present embodiment, also vary depending on the moving direction of the movement member, or the direction of the north pole and south pole, and vary depend on the structure of the permanent magnet used (whether it is a double-pole magnet or a triple-pole magnet, or the direction of magnetization or the like). Furthermore, when rotated 180°, it is not always the case that the spring constant reaches its maximum or minimum in the negative direction, or that the damping coefficient reaches its maximum or minimum. Sometimes an opposite characteristic may appear when rotated from 0° to 90°. Therefore, "a direction away from a relative positional relation at which the spring constant becomes the maximum in the negative direction" as defined in the claims means to rotate at least one of the permanent magnets composing the magnetic spring in a direction generating an opposite characteristic (the spring constant of the magnetic spring becomes the minimum in the negative direction) along a facial direction, and is not limited to a case of rotating 180° as in the present embodiment.

Here, relations between a spring constant, a damping coefficient, and a damping ratio can be expressed as the following equation.

[Equation 1]

$$\xi = \frac{c}{2 \sqrt{m\,k}}$$

(where $\xi$ is a damping ratio, c is a damping coefficient, k is a spring constant, and m is a load).

From the above equation, in an entire seat suspension, when adjusted such that the spring constant obtained by superimposing a spring having a positive spring constant such as a torsion bar upon the spring constant of the magnetic spring of the seat suspension control mechanism relating to the present embodiment is minimum, and the damping coefficient of the magnetic damper of the seat suspension control mechanism relating to the present embodiment is maximum, the damping ratio becomes maximum; and when adjusted such that the spring constant obtained by superimposing is maximum and the damping coefficient is minimum, the damping ratio becomes minimum. Accordingly, as in the present embodiment, when the first and second gear members 51 and 52 are moved in synchronization by a rotational driving unit as the magnet position adjustment mechanism 50, it is necessary as the initial setting that if the same poles of the first and second permanent magnets 31 and 32 are positioned face-to-face, the different poles of the third and fourth permanent magnets 41 and 42 are positioned face-to-face, and conversely, if the different poles of the first and second permanent magnets 31 and 32 are positioned face-to-face, the same poles of the third and fourth permanent magnets 41 and 42 are positioned face-to-face. From this setting, in the present embodiment, when the direction of the first permanent magnet 31 and the direction of the third permanent magnet 41 are rotated 180° by the magnet position adjustment mechanism 50, the damping ratio is maximum, whereas the first and third permanent magnets 31 and 41 are not rotated, the damping ratio is changed to a minimum.

For instance, in a state shown in FIG. 6B, the same poles of the first and second permanent magnets 31 and 32 composing a magnetic spring are positioned face-to-face, and the different poles of the third and fourth permanent magnets 41 and 42 composing a magnetic damper are positioned face-to-face. Accordingly, in such a state, since the magnetic spring has a negative spring constant region within a predetermined displacement range, the spring constant superimposed upon a positive spring constant such as a torsion bar reaches its minimum, and the damping coefficient of the magnetic damper becomes large, which makes the damping ratio of the entire seat suspension reaches its maximum. The Lissajous figure of a relation between the displacement amount at this time (the amount of change in the rotation angle) and the moment shows a shape like a circle as shown in FIG. 9 (a figure shown by "a large damping ratio"). On the contrary, when the directions of the first permanent magnet 31 and the third permanent magnet 41 are rotated 180° by driving the magnet position adjustment mechanism 50, the different poles of the first and second permanent magnets 31 and 32 are positioned face-to-face, and the same poles of the third and fourth permanent magnets 41 and 42 are positioned face-to-face. Then, since the whole spring constant obtained by combining a spring such as a torsion bar becomes large, and the damping coefficient of the magnetic damper becomes small, the damping ratio becomes small. The damping ratio at this time is as shown by a Lissarjous figure in FIG. 9 (a figure shown by "a small damping ratio"). The figure is depicted in an elliptic shape with a predetermined inclination, which shows that the spring constant in the vicinity of the equilibrium point is not nearly zero, but a predetermined positive spring constant.

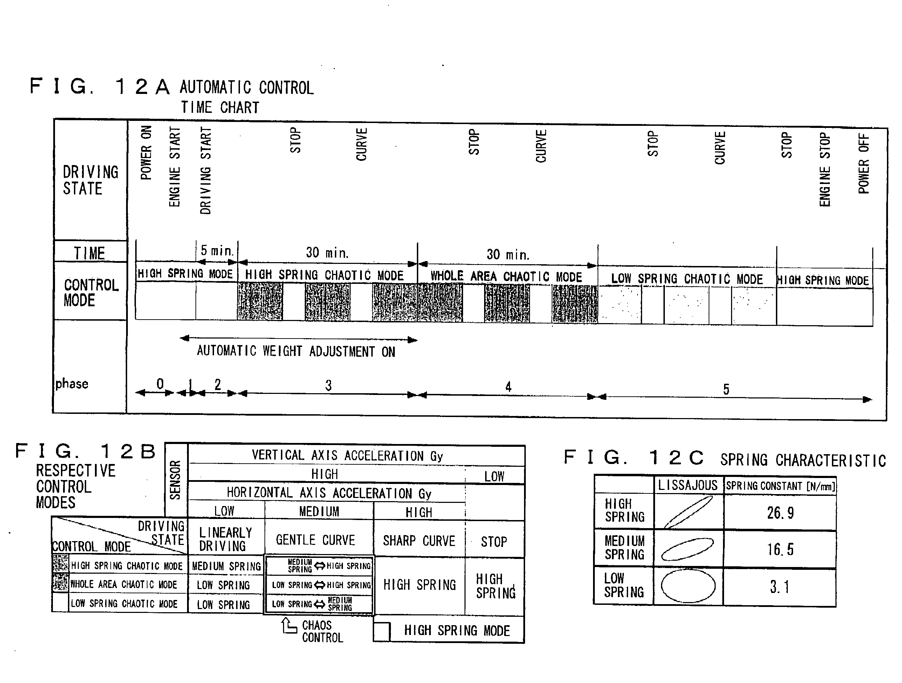

Accordingly, if the damping ratio of the seat suspension is set to be small by the magnet position adjustment mechanism 50 at the time of seating or at the start of driving (for instance, during a predetermined period of time from the start of driving), a sense of dropping at the time of seating or a feeling of something foreign at the start of driving is suppressed because the spring force of a predetermined positive spring constant works even in the vicinity of the equilibrium point. If the damping ratio after that is set to be large by the magnet position adjustment mechanism 50, a high vibration absorbing characteristic can be obtained owing to a function that makes the spring constant nearly zero in the vicinity of the equilibrium point. An example of control will be described later (refer to FIGs. 12A, 12B, and 12C).

It is also possible that a means to detect vibration frequency during driving is provided, and the magnet position adjustment mechanism 50 is allowed to move according to the vibration frequency to adjust the directions of the first and third permanent magnets 31 and 41, so that the damping ratio is changed. In this case, when a motor is used as a rotational driving unit of the magnet position adjustment mechanism 50, it is possible to control the amount of rotation of the motor based on a detected vibration frequency, so as to adjust the damping ratio to be large in a low-frequency range of, for instance, 3 Hz or lower, and to be small in a higher frequency range exceeding the above-described low frequency range. With this structure, control on external stimulation such as vibration or the like becomes minute to enhance riding comfort. Needless to say, the above setting is only an example, and it is also possible to achieve setting of the damping ratio so as to control it based on data obtained by determining the relation between vibration frequency and a damping ratio from a previous experiment of damping ratios at which people feel comfort against every vibration frequency.

Adjustment of the direction of the first and third permanent magnet 31 and 41 by the magnet position adjustment mechanism 50 can be performed to be continued on periodically, randomly or chaotically. In such a case, a spring constant and a damping coefficient, namely, a damping ratio is continued to change periodically, or continued to change at an arbitrary timing. By continuing to vary the damping ratio, the quality of vibration transmitted to a human body is improved to relieve away unpleasant feeling. Especially, by controlling it chaotically, the vibration becomes comfortable and gentle to a human.

This is because the vibration changes to a delicate fluctuation gentle to a human, something closely analogous to the so-called 1/f fluctuation due to becoming a change to repeat a state of a large damping ratio and a state of a small damping ratio. Essentially, the vibration itself inputted from a road surface has a moderate fluctuation, but since it is transmitted via various machine elements used in a vehicle, it changes in quality to a feeling shaken by a machine. However, when the damping ratio is changed periodically, randomly, or chaotically by the seat suspension control mechanism of the present embodiment, it serves as a vibration filter which cancels a feeling of being shaken by a machine and regenerates it as a comfortable vibration.

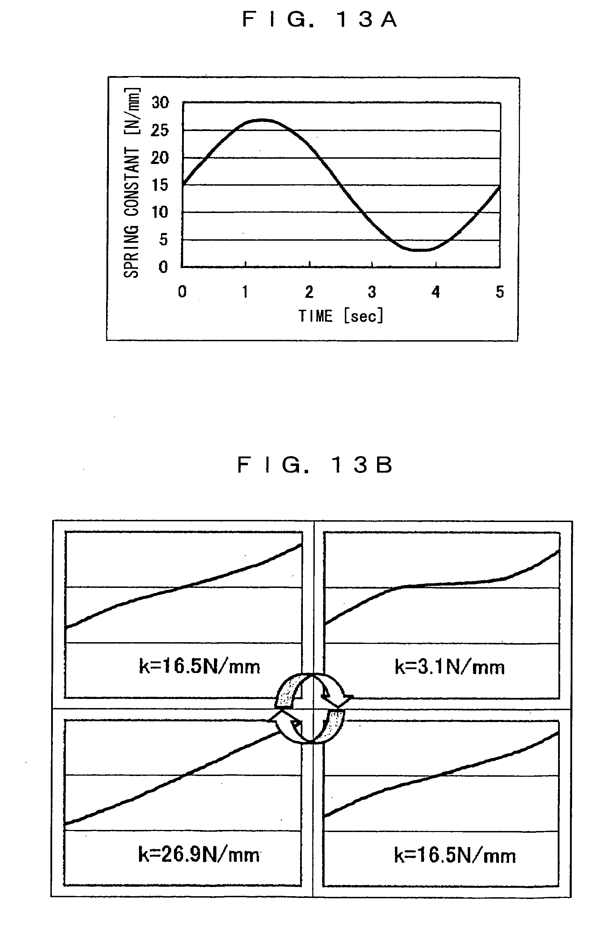

This will be explained referring to FIGs. 13A and 13B. FIG. 13A shows a change of the spring constant when the first permanent magnet 31 composing the magnetic spring is rotated at a 5 second cycle by the magnet position adjustment mechanism 50, and FIG. 13B shows the maximum and minimum values and the medium value between the two of the spring constant in one cycle, showing that the spring constant changes in the arrow direction. As clear from these drawings, when a vibration is inputted from a vehicle body floor, the damping ratio increases during change of the spring constant from the maximum value 26.9 N/mm to the minimum value 3.1 N/mm. Through this change, an inputted vibration is damped. On the other hand, though the vibration inputted during change of the spring constant from the minimum value to the maximum value is not damped by the magnetic spring, since a spring function is enhanced, noise of the inputted vibration is reduced. However, since the damping ratio increases again at the next rotation cycle, the inputted vibration is damped. By rotating the first permanent magnet 31, a state of a large damping ratio and a state of a small damping ratio due to the change of the spring constant as above are repeated, the continuously inputted vibration from a road surface is not transmitted irregularly to a human body via mechanical elements, but is changed to a joggle having a smooth moderate fluctuation.

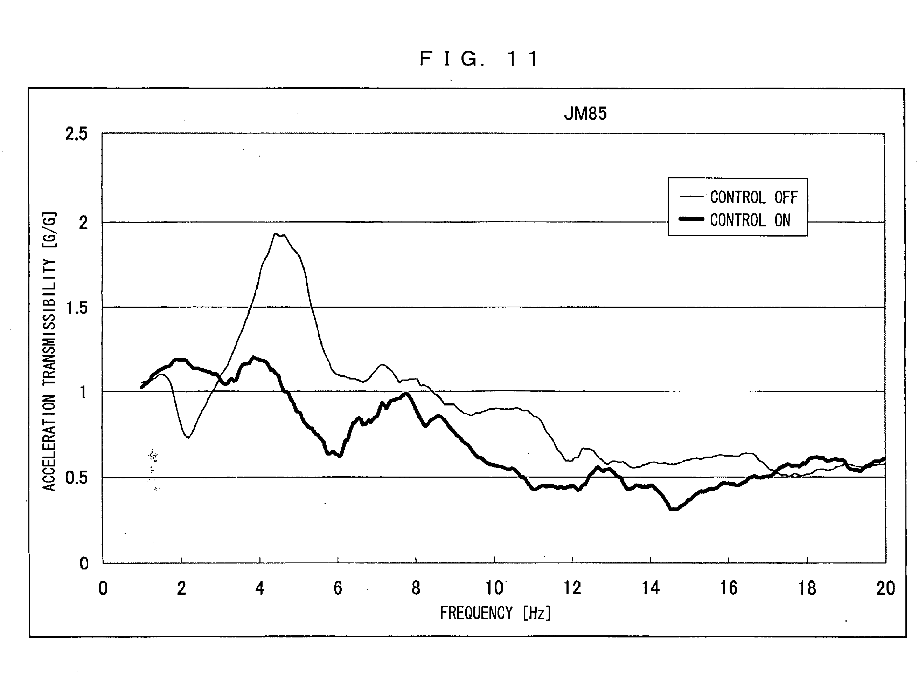

FIG. 11 is data obtained by measuring an acceleration transmissibility when a seat is attached to a seat suspension on which the seat suspension control mechanism of the present embodiment is mounted, a Japanese male of 85 Kg in weight is seated and vibrated by a vibrator using an accelerometer attached to a frame 100 (the so-called under-spring frame 100 included at a lower portion of a cushioning member such as an urethane pad arranged in the seat cushion) shown in FIG. 5. The "control OFF" shown by a fine line in FIG. 11 is data obtained by vibrating the system under conditions such that the first and second permanent magnets 31 and 32 are adjusted so that the different poles are positioned face-to-face, and the third and fourth permanent magnets 41 and 42 are adjusted so that the same poles are positioned face-to-face by the magnet position adjustment mechanism 50 as shown in FIG. 6A, and fixed at the positions in a state that the damping ratio shown by the Lissajous figure in FIG. 9 becomes small, namely, in a state having a predetermined positive spring constant (high spring state). The "control ON" shown by a bold line in FIG. 11 is data obtained by vibrating the magnet position adjustment mechanism 50 while driving it chaotically so that the first and third permanent magnets 31 and 41 are changed between the above-described state of a "small damping ratio" (high spring state), and a state that the same poles of the first and second permanent magnets 31 and 32 composing a magnetic spring are positioned face-to-face and the different poles of the third and fourth permanent magnets 41 and 42 composing a magnetic damper are positioned face-to-face as shown in FIG. 6B, namely, in a state of a large damping ratio shown by the Lissajous figure in FIG. 9 (low spring state).

From FIG. 11, it is understood that when fixed in a state of a small damping ratio (high spring state) according to the present embodiment, resonance appears, but when the damping ratio is chaotically controlled by the magnet position adjustment mechanism 50, resonance does not appear, and thus, acceleration transmissibility is largely improved. In other words, electric energy such as a motor being the rotational driving unit of the magnet position adjustment mechanism 50 changes a spring constant and a damping coefficient by rotating the first and third permanent magnets 31 and 41 chaotically (or periodically, randomly) to convert into physical energy amplified by magnetostatic energy. The physical energy corresponds to potential energy in a state to increase mass on a cushioning pan without rotating the first and third permanent magnets 31 and 41, and the vibration energy inputted into a vehicle body floor is consumed to fluctuate the potential energy so that the vibration transmitted to the cushioning pan is damped.

FIG. 12A is a view showing an example of time charts exhibiting how to rotation control the first and third permanent magnets 31 and 41 by the magnet position adjustment mechanism 50, FIG. 12B is a table showing concrete contents of respective control modes, and FIG. 12C is a table showing an example of spring constant values in respective states of "high spring", "medium spring" and "low spring".

The "high spring (high spring mode)" is a setting to adjust from a positional relation in which the spring constant in the magnetic spring-shown in FIG. 6A becomes the maximum in the negative direction to a state in which the first permanent magnet is rotated to 180° (a state of a small damping ratio) by the magnet position adjustment mechanism 50, and maintains the state. The "low spring (low spring mode)" is a setting to adjust to a positional relation in which the spring constant in the magnetic spring shown in FIG. 6B becomes the maximum in the negative direction (a state of 0 degrees (state of a large damping-ratio) ) and maintains the state, and the "medium spring (medium spring mode)" is a setting to adjust from a positional relation in which the spring constant in the magnetic spring being between the both becomes the maximum in the negative direction to a state in which the first permanent magnet is rotated to 90° and maintains the state.

As shown in FIG. 12B, a "high spring chaotic mode" is a setting to chaotically change between the medium spring mode and the high spring mode in a gentle curve, to adjust to the medium spring mode during linearly driving and fix in the state, and to adjust to the high spring mode in a sharp curve or at the time of stopping and fix in the state. A "whole area chaotic mode" is a setting to chaotically change between the low spring mode and the high spring mode in a gentle curve, to adjust to the low spring mode during linearly driving and fix in the state, and to adjust to the high spring mode in a sharp curve or at the time of stopping and fix in the state. A "low spring chaotic mode" is a setting to chaotically change between the low spring mode and the medium spring mode in a gentle curve, to adjust to the low spring mode during linearly driving and fix in the state, and to adjust to the high spring mode in a sharp curve or at the time of stopping and fix in the state.

As a time chart for a case of automatic control, as shown in FIG. 12A for instance, it is set to be in the high spring mode from the start of driving after a lapse of 5 minutes and to be in the high spring chaotic mode for the next 30 minutes. Through this setting, since support with a relatively spring feeling is given at the time of seating or start of driving, a feeling of something foreign is reduced. For 30 minutes thereafter, it is set to whole area chaotic mode, and thereafter to the low spring chaotic mode. Through this setting, the damping ratio becomes large so that vibration is effectively reduced. Even in a state that the damping ratio becomes large, it is chaotically controlled in a gentle curve, and it is controlled in a high spring mode in a sharp curve. Therefore, a feeling of touching the bottom in a curve or the like is reduced. Further, if it is adjusted to be in the high spring mode immediately after stopping. the feeling of touching bottom at the time of stopping is reduced and a human can be reliably supported. It should be noted that the respective states of a sharp curve, a gentle curve, stopping, and the like are detected by all sorts of sensors (such as an acceleration sensor) attached to a vehicle, and data are fed back to the seat suspension control mechanism for controlling it automatically.

In the above-described embodiment, though a motor is exemplified as a rotational driving unit of the magnet position adjustment mechanism, it is possible to use a combination of an actuator and a flywheel which are driven according to vibration, for instance, inputted from a road surface, instead of a motor or together with a motor. In this case, for instance, if resonance occurs in high spring mode, it is set to drive the actuator, thereby rotating the first or the third permanent magnet to work to increase the damping ratio.

Further, in the above-described embodiment, though one unit of magnet position adjustment mechanism 50 serves both as the magnet position adjustment mechanism of a magnetic spring and the magnet position adjustment mechanism of a magnetic damper defined in the claims, it is possible to make a structure by providing respective separate independent magnet position adjustment mechanisms to control the spring constant of a magnetic spring and the damping coefficient of a magnetic damper individually.

Moreover, in the above-described embodiment, though a portion composing a magnetic spring and a portion composing a magnetic damper are set in a unit to use as a seat suspension control mechanism, it is possible to constitute a magnet spring simplex or a magnetic damper simplex provided with a magnet position adjustment mechanism to adjust a relative positional relation of permanent magnets facing each other. Thereby a magnetic spring having a variable spring constant or a magnetic damper having a variable damping coefficient can be provided.

According to the present invention, a magnet position adjustment mechanism is provided to change a relative positional relation between opposing permanent magnets by rotating at least one of opposing permanent, magnets of respective magnet units composing a magnetic spring and a magnetic damper along the facial direction. Accordingly, by adjusting the magnetic poles of opposing permanent magnets where the poles are, for instance, different or the same, it is possible to change the damping ratio when the movement member passes through. In other words, in a portion to form a magnetic spring, a spring constant varies by rotation of the permanent magnet in the magnet unit composing the magnetic spring, and in a portion to form a magnetic damper, a magnetic circuit to control an eddy current generated in a non-conductor changes to a magnetic flux convergence type or a magnetic flux divergence type by rotation of the permanent magnet in the magnet unit composing the magnetic damper so that a damping coefficient is changed. Accordingly, at the time of seating or the start of driving, if, for instance, a predetermined time and a magnetic spring are adjusted in a range so as not to generate a negative spring constant, and a damping ratio of the magnetic damper is set to become small, a feeling of seating with a sense of a strong spring is obtained so that a sense of dropping can be suppressed at the time of seating, and a feeling of something foreign can also be suppressed at the time of driving start.

When driving is started and getting used to it, if adjustment is made so that the magnetic spring can be in a range of generating a negative spring constant, and a damping coefficient in the magnetic damper becomes large, since a whole spring constant in the vicinity of an equilibrium point in the seat suspension becomes nearly zero and at the same time a damping coefficient is large, it is possible to reduce a feeling of something foreign (a feeling of something pushing up, a feeling of falling, a sense of dropping, and the like) against impact vibration having a low frequency and a large amplitude, and give high resistance to vibration. Moreover, by structuring to vary a relative positional relation of the permanent magnets according to the magnitude of external stimulus or the like, for instance, a means to detect the vibration frequency is provided, and the magnet position adjustment mechanism rotates the permanent magnet by predetermined angles according to the vibration frequency. Then, it is possible to establish a damping ratio to feel comfortable according to the vibration frequency, which allows to achieve better seating comfort, and riding comfort,

The magnet position adjustment mechanism can be set to rotate at least one of the permanent magnets in the respective magnet units composing the magnetic spring or the magnetic damper periodically, randomly or chaotically. By the rotation of the permanent magnet periodically, randomly or chaotically, a spring constant and a damping coefficient are not constant, but always vary at a fixed timing or at an arbitrary timing. Especially, by applying the law of causality of known chaos, for instance, the Lorenz Equation, it becomes chaotic and passive control, and the vibration absorption characteristic is improved. It is desirable to control human perception chaotically rather than randomly. Also when controlling periodically, it is preferable to synchronize with fluctuations of a living body because of the human tendency to dislike fluctuations in the surrounding environment.

**Claims**

1.  A seat suspension control mechanism provided with a first attachment member attached on a vehicle body floor side, and a second attachment member attached to a member which is relatively displaced together with a seat by vibration with respect to the vehicle body floor, said seat suspension control mechanism comprising:

    a magnetic spring provided with a magnet position adjustment mechanism including a magnet unit having a pair of permanent magnets disposed opposedly at a predetermined distance, and a movement member provided with a permanent magnet disposed relatively movable between opposing permanent magnets in said magnet unit, and rotating at least one out of the opposing permanent magnets in said magnet unit along a facial direction so as to adjust a relative positional relation between the opposing permanent magnets to change a spring constant; and
    a magnetic damper provided with a magnet position adjustment mechanism including a magnet unit having a pair of permanent magnets disposed opposedly at a predetermined distance, and a movement member provided with a conductor made of a non-magnetic substance disposed relatively movable between opposing permanent magnets in said magnet unit, and rotating at least one out of the opposing permanent magnets in said magnet unit along a facial direction so as to adjust the relative positional relation between the opposing permanent magnets in order to vary the damping coefficient, wherein
    the magnet unit of said magnetic spring and the magnet unit of said magnetic damper are attached on one out of said first attachment member and second attachment member, and the movement member of said magnetic spring and the movement member of said magnetic damper are fixed on the other of said first attachment member and second attachment member respectively.

**2.** The seat suspension control mechanism according to claim 1, wherein said magnetic spring includes a region to be a negative spring constant at a predetermined displacement range when said movement member composed of a permanent magnet moves between permanent magnets in the magnet unit adjusted in a predetermined relative positional relation by said magnet position adjustment mechanism, wherein said magnetic spring works with an elastic member provided on the seat suspension and having a positive spring constant to adjust a superimposed spring constant to be close to nearly zero.

**3.** The seat suspension control mechanism according to claim 1 or claim 2, wherein
in a case of enlarging the damping ratio of the entire seat suspension, at least one permanent magnet composing a magnet unit of said magnetic spring is rotated a predetermined amount in a direction to be a relative positional relation where the spring constant is the maximum in the negative direction in a predetermined displacement range by the magnet position adjustment mechanism of said magnetic spring to control a superimposed spring constant over an elastic member provided on the seat suspension and having a positive spring constant to be close to nearly zero, and
in a case of lessening the damping ratio of the entire seat suspension, at least one permanent magnet composing a magnet unit of the magnetic spring is rotated a predetermined amount in a direction away from a relative positional relation where the spring constant is the maximum in the negative direction in a predetermined displacement range by the magnet position adjustment mechanism of said magnetic spring to control a superimposed spring constant over the elastic member provided on the seat suspension and having a positive spring constant to enlarge in the positive direction.

**4.** The seat suspension control mechanism according to claim 1 or claim 2, wherein
in a case of enlarging a damping ratio of the entire seat suspension, at least one permanent magnet composing a magnet unit of a magnetic damper is rotated a predetermined amount in a direction to be a relative positional relation where a damping coefficient becomes the maximum by a magnet position adjustment mechanism of said magnetic damper, and
in a case of lessening a damping ratio of the entire seat suspension, at least one permanent magnet composing a magnet unit of the magnetic damper is rotated a predetermined amount in a direction to be a relative positional relation where the damping coefficient becomes the minimum by the magnet position adjustment mechanism of said magnetic damper.

**5.** The seat suspension control mechanism according to claim 1 or claim 2, wherein
in a case of enlarging the damping ratio of the entire seat suspension, at least one permanent magnet composing a magnet unit of the magnetic spring is rotated a predetermined amount in a direction to be a relative positional relation where the spring constant is the maximum in the negative direction in a predetermined displacement range by the magnet position adjustment mechanism of said magnetic spring to control a superimposed spring constant over an elastic member provided on the seat suspension and having a positive spring constant to be close to nearly zero, and at least one permanent magnet composing a magnet unit of the magnetic damper is rotated in a direction to be a relative positional relation where the damping coefficient is the maximum by a magnet position adjustment mechanism of said magnetic damper, and
in a case of lessening the damping ratio of the entire seat suspension, at least one permanent magnet composing a magnet unit of the magnetic spring is rotated a predetermined amount in a direction away from a relative positional relation where the spring constant is the maximum in the negative direction in a predetermined displacement range by the magnet position adjustment mechanism of said magnetic spring to control a superimposed spring constant over the elastic member provided on the seat suspension and having a positive spring constant to enlarge in the positive direction, and at least one permanent magnet composing a magnet unit of the magnetic damper is adjusted in a direction to be a relative positional relation where the damping coefficient is the minimum by a magnet position adjustment mechanism of said magnetic damper.

**6.** The seat suspension control mechanism according to any one from claims 1 to 5, wherein
a magnet position adjustment mechanism composing said magnetic spring and a magnet position adjustment mechanism composing said magnetic damper are controlled by the same rotational driving unit, in which the magnet position adjustment mechanism includes:

a first gear member connected to any one of the permanent magnets of any one set of the magnet units composing said magnetic spring and magnetic damper;
a second gear member connected to any one of the permanent magnets of the other set of said magnet units; and
a third gear member engaging with said first and second gear members,

wherein said rotational driving unit is connected to any one of the first, second, and third gear members, so that the first gear member and the second gear member rotate in synchronization with each other.

7. The seat suspension control mechanism according to any one from claims 1 to 6, wherein
a magnet position adjustment mechanism composing said magnetic spring and a magnet position adjustment mechanism composing said magnetic damper are controlled independently by rotational driving units provided thereon respectively, and
the respective rotational driving units are connected to any one permanent magnet of any one set of the magnet units composing said magnetic spring and the magnetic damper, and any one permanent magnet of the other set of the magnet units to perform position adjustment by rotating the permanent magnets of the respective sets independently.

8. The seat suspension control mechanism according to any one from claims 1 to 7, wherein
the magnet position adjustment mechanism is set to rotate at least one permanent magnet in the respective magnet units periodically, randomly, or chaotically.

9. A magnetic spring, comprising:

a magnet unit provided with a pair of permanent magnets opposedly disposed at a predetermined distance; and a movement member provided with a permanent magnet disposed relatively movable between opposing permanent magnets of said magnet unit,

wherein said magnet unit is provided with a magnet position adjustment mechanism rotating at least one of opposing permanent magnets of said magnet unit along a facial direction to change a spring constant by adjusting a relative positional relation between opposing permanent magnets.

10. A magnetic damper, comprising:

a magnet unit provided with a pair of permanent magnets opposedly disposed at a predetermined distance; and

a movement member provided with a conductor made from a non-magnetic substance disposed relatively movable between opposing permanent magnets of the magnet unit,
wherein said magnetic damper is provided with a magnet position adjustment mechanism rotating at least one of opposing permanent magnets of said magnet unit along a facial direction to change a damping coefficient by adjusting a relative positional relation between opposing permanent magnets.

F I G. 1

F I G. 2

# F I G. 3

# F I G. 4

F I G. 5

FIG. 6A

180°

FIG. 6B

0°

F I G. 7

## FIG. 8A

0° COPPER THICKNESS 5.5[mm]
MAGNET THICKNESS 4.4[mm]

DAMPING COEFFICIENT
467.48[Nm⁻¹s]

## FIG. 8B

COPPER THICKNESS 3.5[mm]
MAGNET THICKNESS 5.4[mm]

DAMPING COEFFICIENT
543.18[Nm⁻¹s]

## FIG. 8C

COPPER THICKNESS 5.5[mm]
MAGNET THICKNESS 4.4[mm]

DAMPING COEFFICIENT
595.84[Nm⁻¹s]

## FIG. 8D

180° COPPER THICKNESS 5.5[mm]
MAGNET THICKNESS 4.4[mm]

DAMPING COEFFICIENT
50.47[Nm⁻¹s]

## FIG. 8E

COPPER THICKNESS 3.5[mm]
MAGNET THICKNESS 5.4[mm]

DAMPING COEFFICIENT
57.78[Nm⁻¹s]

## FIG. 8F

COPPER THICKNESS 5.5[mm]
MAGNET THICKNESS 4.4[mm]

DAMPING COEFFICIENT
329.40[Nm⁻¹s]

EP 1 702 791 A2

F I G. 9

# FIG. 10A

Vector Potential

# FIG. 10B

Vector Potential

# F I G. 1 1

JM85

CONTROL OFF
CONTROL ON

EP 1 702 791 A2

# F I G. 1 2 A AUTOMATIC CONTROL
## TIME CHART

| DRIVING STATE | POWER ON | ENGINE START | DRIVING START | | STOP | CURVE | | STOP | CURVE | | STOP | CURVE | | STOP | ENGINE STOP | POWER OFF |
|---|---|---|---|---|---|---|---|---|---|---|---|---|---|---|---|---|
| TIME | | | 5 min. | | 30 min. | | | 30 min. | | | | | | | | |
| CONTROL MODE | HIGH SPRING MODE | | | HIGH SPRING CHAOTIC MODE | | | WHOLE AREA CHAOTIC MODE | | | LOW SPRING CHAOTIC MODE | | | | HIGH SPRING MODE | | |

AUTOMATIC WEIGHT ADJUSTMENT ON

| phase | 0 | 1 | 2 | 3 | 4 | 5 |

---

# F I G. 1 2 B
## RESPECTIVE CONTROL MODES

| | SENSOR | VERTICAL AXIS ACCELERATION Gy | | | |
|---|---|---|---|---|---|
| | | HIGH | | | LOW |
| | | HORIZONTAL AXIS ACCELERATION Gy | | | |
| CONTROL MODE / DRIVING STATE | | LOW | MEDIUM | HIGH | |
| | | LINEARLY DRIVING | GENTLE CURVE | SHARP CURVE | STOP |
| HIGH SPRING CHAOTIC MODE | | MEDIUM SPRING | MEDIUM SPRING ⟺ HIGH SPRING | HIGH SPRING | HIGH SPRING |
| WHOLE AREA CHAOTIC MODE | | LOW SPRING | LOW SPRING ⟺ HIGH SPRING | | |
| LOW SPRING CHAOTIC MODE | | LOW SPRING | LOW SPRING ⟺ MEDIUM SPRING | | |

⤴ CHAOS CONTROL

☐ HIGH SPRING MODE

---

# F I G. 1 2 C SPRING CHARACTERISTIC

| | LISSAJOUS | SPRING CONSTANT [N/mm] |
|---|---|---|
| HIGH SPRING | | 26.9 |
| MEDIUM SPRING | | 16.5 |
| LOW SPRING | | 3.1 |

## F I G. 1 3 A

## F I G. 1 3 B

k=16.5N/mm

k=3.1N/mm

k=26.9N/mm

k=16.5N/mm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003320884 A